# EUROPÄISCHE PATENTANMELDUNG

(11) **EP 1 898 513 A1**
(43) Veröffentlichungstag der Anmeldung: **12.03.2008**
(21) Anmeldenummer: 06018717.6
(22) Anmeldetag: 06.09.2006
(51) Int. Cl.: H02K 1/32, H02K 3/24

(54) **Rotorkühlung für eine dynamoelektrische Maschine**

(71) Anmelder: SIEMENS AKTIENGESELLSCHAFT, 80333 München (DE)
(72) Erfinder: Adolf, Haiko, 99099 Erfurt (DE); Kaluza, Heinrich, 99096 Erfurt (DE); Michelsson, Olaf, 99310 Arnstadt (DE); Reinold, Johannes, 44577 Castrop-Rauxel (DE)

(57) **Zusammenfassung**

Die Erfindung betrifft einen Rotor (2) für eine dynamoelektrische Maschine, wobei im Rotor (2) ein Grundkanal (9) angeordnet ist, durch den im Betrieb ein Kühlungsmedium strömt und über Radialkanäle (12) die Leiter (4) gekühlt werden. Der Grundkanal (9) ist hierbei erfindungsgemäß derart ausgebildet, dass der Grundkanal-Querschnitt sich zur Mitte des Rotors (2) hin verringert.

## Beschreibung

Die Erfindung betrifft einen Rotor für eine dynamoelektrische Maschine, wobei der Rotor einen Grundkanal zum Kühlen von am Rotor angeordneten Leitern aufweist, wobei der Rotor derart ausgebildet ist, dass durch diesen im Betrieb ein Kühlungsmedium strömbar ist.

Unter einer dynamoelektrischen Maschine ist u. a. ein Generator oder ein Motor zu verstehen. Die vorliegende Anmeldung bezieht sich vorzugsweise auf Generatoren, wobei die Erfindung auch auf andere elektrische Maschinen anzuwenden ist. Generatoren für die kommunale Energieversorgung weisen eine Leistungskapazität von mehreren hundert MVA auf. Generatoren weisen im Wesentlichen einen Rotor und einen um den Rotor angeordneten Ständer auf. Sowohl der Rotor als auch der Ständer weisen Leiter auf, durch die ein elektrischer Strom fließt. Diese elektrischen Ströme sind vergleichsweise hoch und verursachen eine starke Erwärmung der Leiter. Die Leiter, insbesondere im Rotor müssen deswegen gekühlt werden. Dafür werden im Wesentlichen zwei Kühlungsmedien verwendet bzw. eingesetzt. Es kann beispielsweise Wasserstoff oder Wasser als Kühlungsmedium eingesetzt werden.

Die elektrischen Leiter in den Rotoren werden in so genannte Nuten eingebettet, wobei zwischen dem elektrischen Leiter und dem Rotorgrundkörper ein Grundkanal ausgebildet ist. Dieser Grundkanal wird gemäß dem Stand der Technik als ein Kanal mit konstantem Querschnitt ausgebildet.

Zur Kühlung wird das Kühlmedium an einem Ende durch den Grundkanal geleitet, wobei der Grundkanal in der Regel Radialkanäle aufweist, die in Richtung der Leiter gerichtet sind. Das Kühlmedium strömt zunächst durch den Grundkanal und anschließend durch die Radialkanäle zu den zu kühlenden Leitern. Aufgrund eines physikalischen Effektes, der durch die so genannte Bernoulli-Gleichung beschrieben wird, sind die Geschwindigkeit und der Druck des Kühlmediums am Eingang des Grundkanals unterschiedlich zu dem Druck und der Geschwindigkeit des Kühlmediums in der Mitte des Läufers im Grundkanal. An der Rotorstirn ist durch die hohe Strömungsgeschwindigkeit im Grundkanal die Abzweigung in die Radialkanäle schwierig. Dadurch kommt es zu einer schlechten Weiterführung des Kühlmediums an der Rotorstirn in die Radialkanäle. Wohingegen in der Generatormitte eine vergleichsweise gute Weiterführung des Kühlmediums in die Radialkanäle möglich ist, da die Strömungsgeschwindigkeit in der Läufermitte vergleichsweise gering ist. Dadurch ist die Kühlleistung in axialer Richtung unterschiedlich. Die Rotorstirn wird vergleichsweise schlechter gekühlt als die Rotormitte.

An dieser Stelle setzt die Erfindung an, deren Aufgabe es ist, eine Rotorkühlung für eine elektrische Maschine anzubieten, wobei der Rotor in axialer Richtung gleichmäßig kühlbar ist.

Gelöst wird diese Aufgabe durch einen Rotor für eine dynamoelektrische Maschine, wobei der Rotor einen Grundkanal mit einem Grundkanal-Querschnitt zum Kühlen vom am Rotor angeordneten Leitern aufweist, wobei der Rotor derart ausgebildet ist, dass durch diesen im Betrieb ein Kühlungsmedium strömbar ist, wobei der Grundkanal-Querschnitt sich verringert.

Die Erfindung geht u. a. von dem Aspekt aus, dass eine Verlangsamung des Kühlungsmediums an den Stellen erreicht werden muss, die gemäß dem Stand der Technik eine hohe Strömungsgeschwindigkeit aufweisen. Eine hohe Strömungsgeschwindigkeit bedeutet, dass wenig Kühlmedium in die Radialkanäle gelangt. Die Erfindung geht daher von dem Aspekt aus, dass gemäß der Bernoulli-Gleichung die Strömungsgeschwindigkeit zur Rotormitte hin im Grundkanal verringert werden kann, indem der Grundkanal-Querschnitt zur Rotormitte hin verringert wird. Dadurch wird die Strömungsgeschwindigkeit an der Rotorstirn verringert, wodurch mehr Kühlluft durch die Radialkanäle im Bereich der Rotorstirn durchströmbar ist. Dadurch wird eine Vergleichsmäßigung der Strömungsgeschwindigkeit des Kühlmediums zwischen Generatorstirn und Generatormitte erreicht.

Dadurch ist es möglich die Lebensdauer der elektrischen Maschine zu verlängern.

Vorteilhafte Weiterbildungen sind in den Unteransprüchen beschrieben.

In einer vorteilhaften Weiterbildung weist der Rotor radiale Kühlbohrungen auf, die im Wesentlichen senkrecht zu einer Rotationsachse des Rotors ausgebildet sind. Dadurch ist eine gute Weiterleitungsmöglichkeit für das Kühlungsmedium möglich, wobei das durch die radialen Kühlbohrungen durchströmende Kühlmedium zum Kühlen der Leiter genutzt wird.

In einer vorteilhaften Weiterbildung sind die radialen Kühlbohrungen strömungstechnisch mit dem Grundkanal verbunden.

Zweckmäßigerweise ist der Grundkanal-Querschnitt derart ausgebildet, dass er sich im Wesentlichen zur Rotor-Mitte hin verringert. Die durch die Bernoullische-Gleichung beschreibbare Strömungsgeschwindigkeit wird durch diese zweckmäßige Weiterbildung an der Rotorstirn im Vergleich zur Rotormitte hin verleichmäßigt, was zu einer besseren Kühlung des Leiters zur Folge hat.

In einer weiteren vorteilhaften Weiterbildung befindet sich der kleinste Querschnitt des sich verjüngenden Grundkanal-Querschnitts im Wesentlichen in der Rotormitte. Dadurch ist es möglich, den im wesentlichen rotationssymmetrisch als auch zur Rotormitte hin spiegelsymmetrisch ausgebildeten Rotor gleichmäßig zu kühlen. Die Kühlung an den Rotorstirnen wird demnach keine größeren Unterschiede aufweisen, da die Strömungsprofile als auch die Druckprofile von den beiden Rotorstirnseiten zur Rotormitte hin im Wesentlichen gleich sind.

In einer weiteren vorteilhaften Weiterbildung weist der Grundkanal gerade ausgebildete Begrenzungswände auf. Dadurch lässt sich der Grundkanal leichter fertigen. Eine Reduzierung der Kosten bei der Herstellung des Rotors ist demnach möglich.

In einer vorteilhaften Weiterbildung ist zumindest eine Begrenzungswand das Grundkanals nicht linear ausgebildet. Dadurch ist es möglich, das Geschwindigkeitsprofil des Kühlmediums durch den nicht linearen Verlauf der Begrenzungswand des Grundkanals zu ändern oder an die Kühlerfordernisse anzupassen. Beispielsweise kann erwünscht sein, dass in der Rotormitte eine sehr hohe Geschwindigkeit des Kühlmediums gefordert wird. Durch eine nicht lineare Verjüngung einer Begrenzungswand kann die Geschwindigkeit des Kühlmediums in der Rotormitte zweckmäßig geändert werden.

In einer weiteren vorteilhaften Weiterbildung weist die zumindest eine Begrenzungswand einen konvexen Verlauf auf. Der konvexe Verlauf hat den Vorteil, dass die Begrenzungswand keine Unstetigkeit aufweist, und dadurch keine strömungstechnisch verursachten Geschwindigkeitssprünge auftauchen. Durch den konvexen Verlauf kann die Geschwindigkeit des Kühlmediums dennoch individuell angepasst werden. Die Begrenzungswand kann hierbei nahezu jede beliebige Form eines konvexen Verlaufes aufweisen. Beispielsweise kann die Begrenzungswand Teil eines Kreisbogens darstellen oder dem Verlauf einer Parabel folgen.

In einer weiteren vorteilhaften Weiterbildung weist der Grundkanal eine im Wesentlichen parallel zur Rotationsachse ausgebildete Grundkanalbegrenzungsgrundfläche auf.

In einer weiteren vorteilhaften Weiterbildung weist der Grundkanal eine der Grundkanalbegrenzungsgrundfläche gegenüberliegende, schräg zur Grundkanalbegrenzungsgrundfläche angeordnete Grundkanalbegrenzungsoberfläche auf. Das bedeutet, dass eine Fläche parallel zur Rotationsachse ausgebildet wird und die gegenüber dieser liegenden Fläche schräg dazu verläuft. Dadurch ist es möglich, den Rotor schneller und dadurch kostengünstiger herzustellen.

In einer weiteren vorteilhaften Weiterbildung weist der im Wesentlichen in der Rotormitte liegende Grundkanal-Querschnitt eine Größe zwischen 30% und 50% der Größe des Grundkanal-Querschnitts am Rotorende auf. Experimentelle Untersuchungen haben gezeigt, dass die Verringerung des Querschnitts des Grundkanals zwischen diesen beiden Werten eine besonders gute Kühlwirkung zur Folge hat.

Ausführungsbeispiele der Erfindung werden nachfolgend anhand der Zeichnung beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen. Im Einzelnen zeigt die Zeichnung in:
- FIG 1: eine perspektivische Darstellung eines Generators.
- FIG 2: eine perspektivische Darstellung eines Teils eines Rotors.
- FIG 3: eine Querschnittsansicht eines Rotors gemäß Stand der Technik.
- FIG 4: eine Querschnittansicht eines erfindungsgemäßen Rotors.
- FIG 5: eine alternative Ausführungsform des erfindungsgemäßen Rotors.

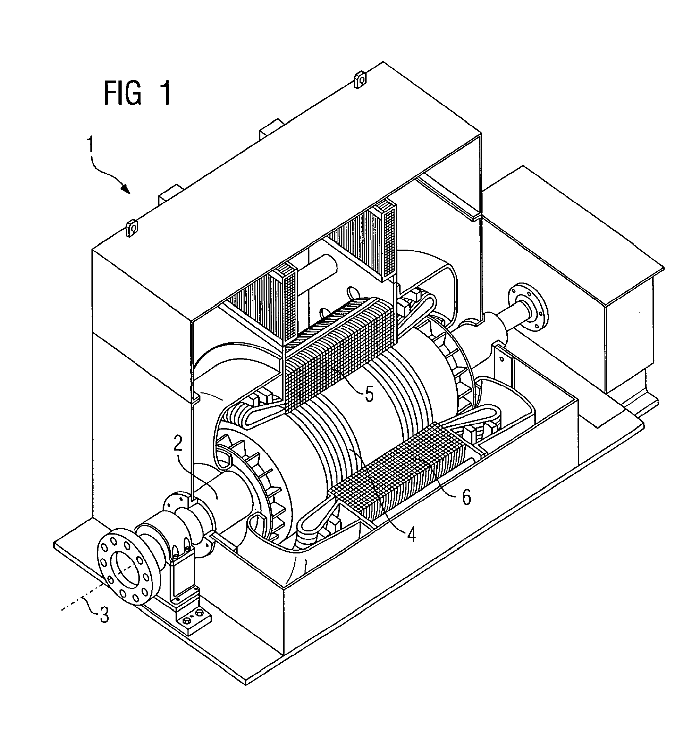

In der FIG 1 ist eine perspektivische Darstellung eines Generators 1 zu sehen. Der Generator 1 ist als Ausführungsbeispiel einer dynamoelektrischen Maschine zu sehen. Ein weiteres Beispiel einer dynamoelektrischen Maschine wäre ein elektrischer Motor. Der Generator 1 umfasst im Wesentlichen zwei Bauteile. Ein Rotor 2 ist um eine Rotationsachse 3 drehbar angeordnet. Der Rotor 2 umfasst mehrere in axialer Richtung ausgerichtete Leiter 4 auf. Die elektrischen Leiter 4 werden über nicht näher dargestellte Erregerstromzuführungen mit einem Erregerstrom gekoppelt. Dadurch entsteht ein magnetisches Feld um den Rotor 2. Der Rotor 2 wird durch nicht dargestellte Dampf- oder Gasturbinen in Drehung versetzt. Die Drehfrequenz liegt hierbei in der Regel bei 50 bzw. 60 Hz.

Um den Rotor 2 ist ein Ständer 5 angeordnet, der eine Ständerwicklung 6 aufweist. In der Ständerwicklung 6 wird durch das rotierende Magnetfeld des Rotors 2 eine elektrische Spannung induziert, die in ein Hochspannungsnetz anschließend eingespeist wird. Die in den Leitern 4 strömenden elektrischen Erregerströme sind vergleichsweise hoch, so dass die dadurch entstehende Wärmeentwicklung durch Kühlung verringert werden muss.

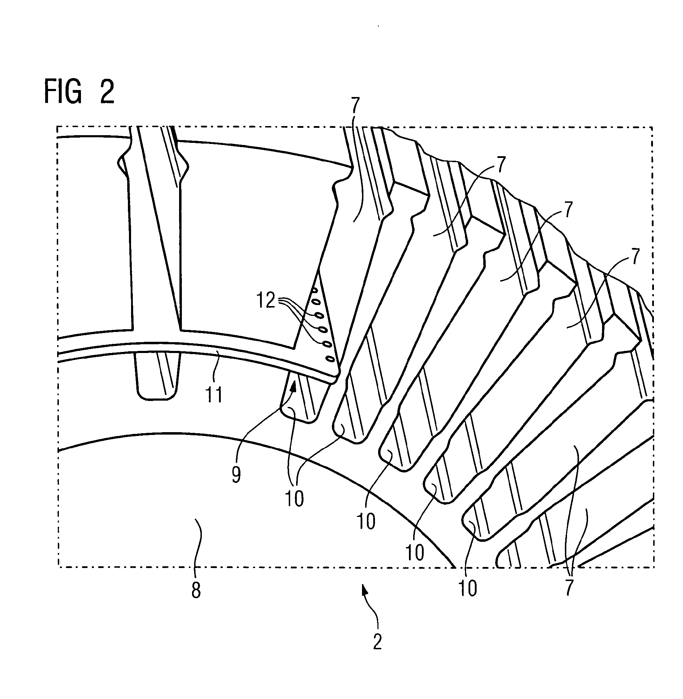

In der FIG 2 ist ein Ausschnitt des Rotors 2 in einer perspektivischen Darstellung zu sehen. Der Rotor 2 umfasst mehrere nebeneinander angeordnete Nuten 7 auf. In diese Nuten werden in der FIG 2 nicht näher dargestellte Leiter angeordnet, durch die der Erregerstrom fließt. Die Nuten 7 sind länglich ausgebildet und haben in der Regel einen gleich bleibenden Querschnitt von der Rotorstirn bis zur gegenüberliegenden Rotorstirnseite, die in der FIG 2 nicht zu erkennen ist. Die Leiter 4 weisen die gleiche Breite auf wie die Nuten 7. Die Höhe der Leiter 4 ist geringer als die Höhe 16 der Nuten 7. Dadurch entsteht ein Grundkanal 9 zwischen dem Leiter 4 und einer Grundkanalbegrenzungsgrundfläche 10.

Zwischen der Grundkanalbegrenzungsgrundfläche 10 und einer unteren Fläche des Leiters 4 ist in der Regel ein Begrenzungsmittel 11 eingebaut. Das Begrenzungsmittel 11 kann aus Kupfer ausgebildet sein. In dem Begrenzungsmittel 11 sind Radialkanäle 12 ausgebildet. Die Radialkanäle 12 sind strömungstechnisch mit dem Grundkanal 9 verbunden, die Radialkanäle 12 haben sozusagen die Aufgabe, ein Strömungsmedium, das durch den Grundkanal 9 strömt, zu den zu kühlenden Leitern 4 zu führen. Je nachdem welche Kühlleistung gefordert wird, muss die Anzahl an Radialkanälen 12 angepasst werden.

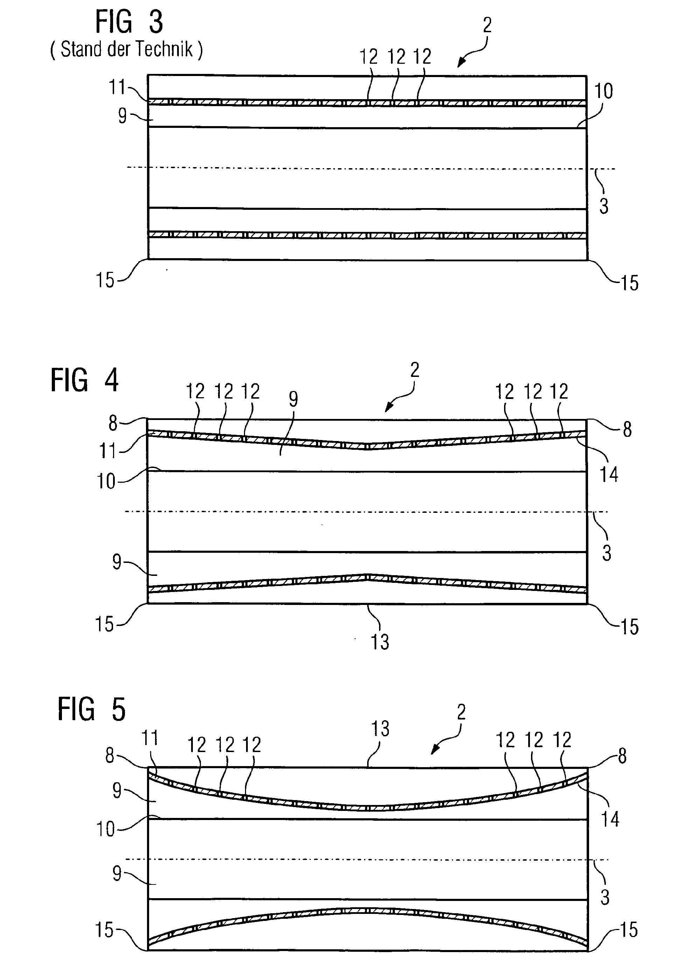

In der FIG 3 ist ein Läufer in einer Querschnittsansicht zu sehen. Der Läufer gemäß FIG 3 ist gemäß dem Stand der Technik ausgebildet.

Der Grundkanal 9 ist hierbei, wie in FIG 3 dargestellt, durch die Grundkanalbegrenzungsgrundfläche 10 und des Begrenzungsmittels 11 definiert. Im Betrieb strömt durch den Grundkanal 9 ein Kühlmedium, beispielsweise Wasser bzw. Wasserstoff. Das Begrenzungsmittel 11 ist hierbei parallel zur Grundkanalbegrenzungsgrundfläche 10 ausgebildet.

In der FIG 4 ist eine Querschnittansicht eines erfindungsgemäßen Rotors 2 dargestellt. Der Rotor gemäß FIG 4 ist mit einem Grundkanal 9 ausgebildet, der zum Kühlen von am Rotor 2 angeordneten Leitern 4 ausgebildet ist, wobei durch den Kühlkanal 9 im Betrieb ein Kühlungsmedium strömbar ist, wobei der Grundkanal-Querschnitt sich verringert. Der Kühlkanalquerschnitt verringert sich hierbei von der Stirnseite 8 zur Rotormitte 13 hin. Der Rotor 2 weist hierbei Radialkanäle 12 auf, die im wesentlichen senkrecht zu einer Rotationsachse 3 des Rotors 2 ausgebildet sind.

Die Radialkanäle 12 sind strömungstechnisch mit dem Grundkanal 9 verbunden.

Der Grundkanal-Querschnitt weist im Wesentlichen in der Rotormitte 13 den kleinsten Querschnitt auf. Fertigungstechnisch leicht herzustellen ist eine Ausführungsform des Grundkanals durch gerade Begrenzungswände 14 und gerade ausgebildetem Begrenzungsmittels 11.

In der FIG 5 ist in einer alternativen Ausführungsform ein Rotor 2 dargestellt, dessen Begrenzungswand 14 nicht linear verläuft. Die Begrenzungswand 14 kann hierbei einen konvexen Verlauf aufweisen. Der Grundkanal 9 kann eine im wesentlichen parallel zur Rotationsachse 3 ausgebildete Grundkanalbegrenzungsgrundfläche 10 aufweisen. Gegenüber der Grundkanalbegrenzungsgrundfläche 10 kann die Grundkanalbegrenzungsfläche 14 schräg ausgebildet werden. Der Grundkanal-Querschnitt in der Rotormitte hat eine Größe, dessen Wert zwischen 30% und 50% der Größe des Grundkanal-Querschnitts am Rotorende 15 liegt.

### Bezugszeichenliste

- 1: Generator
- 2: Rotor
- 3: Rotationsachse
- 4: Leiter
- 5: Ständer
- 6: Ständerwicklung
- 7: Nuten
- 8: Stirnseite
- 9: Grundkanal
- 10: Grundkanalbegrenzungsgrundfläche
- 11: Begrenzungsmittel
- 12: Kühlbohrungen
- 13: Rotormitte
- 14: Begrenzungswände
- 15: Rotorende

## Patentansprüche

1. Rotor (2) für eine dynamoelektrische Maschine,
wobei der Rotor (2) einen Grundkanal (19) mit einem Grundkanal-Querschnitt zum Kühlen von am Rotor (2) angeordneten Leitern aufweist,
wobei der Rotor derart ausgebildet ist,
dass durch diesen im Betrieb ein Kühlungsmedium strömbar ist,
**dadurch gekennzeichnet, dass**
der Grundkanal-Querschnitt sich verringert.

2. Rotor (2) nach Anspruch 1,
wobei der Rotor (2) radiale Kühlbohrungen (12) aufweist, die im wesentlichen senkrecht zur Rotationsachse (3) des Rotors (2) ausgebildet sind.

3. Rotor (2) nach Anspruch 2,
wobei die radialen Kühlbohrungen (12) strömungstechnisch mit dem Grundkanal (9) verbunden sind.

4. Rotor (2) nach einem der vorhergehenden Ansprüche,
wobei der Grundkanal-Querschnitt sich im Wesentlichen zur Rotor-Mitte (13) hin verringert.

5. Rotor (2) nach Anspruch 4,
wobei der Grundkanal-Querschnitt im Wesentlichen in der Rotor-Mitte (13) den kleinsten Querschnitt aufweist.

6. Rotor (2) nach einem der vorhergehenden Ansprüche,
wobei der Grundkanal (9) gerade ausgebildete Begrenzungswände (14) aufweist.

7. Rotor nach einem der Ansprüche 1 bis 5,
wobei zumindest eine Begrenzungswand des Grundkanals (2) nicht linear ausgebildet ist.

8. Rotor (2) nach Anspruch 7,
wobei zumindest eine Begrenzungswand einen konvexen Verlauf aufweist.

9. Rotor (2) nach einem der vorhergehenden Ansprüche,
wobei der Grundkanal (9) eine im wesentlichen parallel zur Rotationsachse (3) ausgebildete Grundkanalbegrenzungsgrundfläche (10) aufweist.

10. Rotor (2) nach Anspruch 9,
wobei der Grundkanal (9) eine der Grundkanalbegrenzungsgrundfläche (10) gegenüberliegende, schräg zur Grundkanalbegrenzungsgrundfläche (10) angeordnete Grundkanalbegrenzungsoberfläche (19) aufweist.

11. Rotor (2) nach einem der vorhergehenden Ansprüche,
wobei der in der im Wesentlichen in der Rotormitte (13) aufweisende Grundkanal-Querschnitt eine Größe zwischen 30% und 50% der Größe des Grundkanal-Querschnitts am Rotorende (15) aufweist.
